# EUROPEAN PATENT APPLICATION

(11) **EP 3 782 765 A1**
(43) Date of publication of application: **24.02.2021**
(21) Application number: 20191247.4
(22) Date of filing: 17.08.2020
(51) Int. Cl.: B23K 35/02, B23K 35/36, B23K 35/362, C22C 38/02, C22C 38/04, C22C 38/08, B23K 35/38, B23K 35/40

(54) **HIGHER TOUGHNESS STEEL ALLOY WELD DEPOSITS AND FLUX-CORED WELDING ELECTRODES FOR PRODUCING HIGHER TOUGHNESS STEEL ALLOY WELD DEPOSITS**

(30) Priority: 20.08.2019 US 201916546016
(71) Applicant: Hobart Brothers LLC, Troy OH 45373 (US)
(72) Inventor: AMATA, Mario A., Troy, OH 45373 (US); BARHORST, Steven E., Troy, OH 45373 (US); BUNDY, Joseph C., Troy, OH 45373 (US); FIORE, Susan R., Troy, OH 45373 (US)
(74) Representative: HGF

(57) **Abstract**

The present disclosure is directed to flux-cored welding electrodes designed to produce higher toughness steel alloy weld deposits, and to the higher toughness weld deposits themselves. The weld deposits may comprise less than 0.20 (or less than 0.15) weight percent silicon. The flux-cored welding electrodes comprise a flux core and a tubular steel strip. The flux core may comprise, by weight percent of the electrode, 0.25-0.30% zirconium, 0.12-0.18% aluminum, and 0-0.11% silicon. The metallic zirconium, aluminum, and silicon may be added to the flux core in the form of silicon-zirconium metal powder and aluminum-zirconium metal powder.

## Description

### FIELD

The present disclosure generally relates to flux-cored welding electrodes for producing higher toughness steel alloy weld deposits, and to the higher toughness weld deposits themselves.

### BACKGROUND

Fundamentally, all steels are mixtures, or, more properly, alloys of iron and carbon. However, even the so-called plain-carbon steels have small, but specified, amounts of manganese and silicon plus small and (generally unavoidable) amounts of phosphorus and sulfur. The carbon content of plain-carbon steels may be as high as 2.0%, but such an alloy is rarely found. The carbon content of commercial steels usually ranges from about 0.05 to about 1.0%.

The process by which iron changes from one atomic arrangement to another when heated through 912 °C (1674 °F) is called a transformation. Transformations of this type occur not only in pure iron but also in many of its alloys; each alloy composition transforms at its own characteristic temperature. It is this transformation that makes possible the variety of properties that can be achieved to a high degree of reproducibility through use of carefully selected heat treatments.

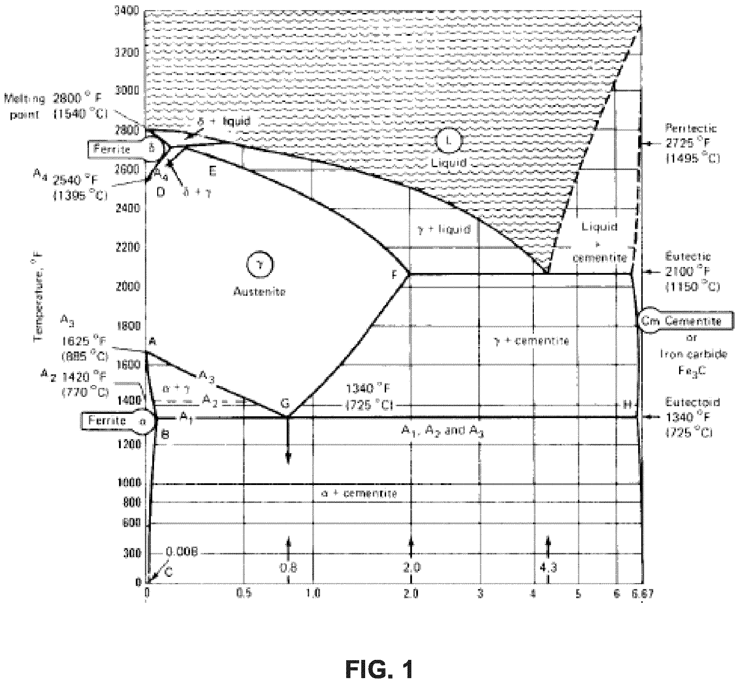

A phase diagram is a graphical representation of the equilibrium temperature and composition limits of phase fields and phase reactions in an alloy system. In the iron-cementite system, temperature is plotted vertically, and composition is plotted horizontally. The iron-cementite diagram (shown in Fig. 1), deals only with the constitution of the iron-iron carbide system, i.e., what phases are present at each temperature and the composition.

When a steel alloy is cooled quickly, the carbon atoms cannot make an orderly escape from the iron lattice. This causes "atomic bedlam" and results in distortion of the lattice, which leads to enhanced hardness, strength, or both (although potentially also with an increase in the brittleness of the steel alloy). If the cooling is fast enough (e.g., during quenching), a new structure known as martensite may be formed, although this new structure (an aggregate of iron and cementite) is in the alpha phase.

Although there are typically only three stable phases in plain carbon steel alloys at room temperature (ferrite, cementite, and pearlite), there are numerous different structures that may be formed by different cooling processes and control of the alloy composition.

### SUMMARY

The present disclosure relates generally to a flux-cored welding electrode for producing a higher toughness steel alloy weld deposit.

According to an aspect of the present disclosure, a flux-cored welding electrode for producing a higher toughness steel alloy weld deposit comprises a flux core and a tubular steel strip. The flux core may comprise, by weight percent of the electrode, 0.25-0.30% zirconium, 0.12-0.18% aluminum, 0-0.11% silicon, 0.46-0.52% magnesium, 1.85-2.05% manganese, 0.35-0.45% nickel, 0.004-0.008% boron, 0.16-0.22% sodium oxide, 7.0-8.0% titanium dioxide, 0-0.50% silicon dioxide, and 0.20-0.30% fluoride. The fluoride may be chosen from the group consisting of: lithium fluoride, sodium fluoride, aluminum fluoride, sodium cryolite, potassium fluorosilicate, Teflon, and combinations thereof. The tubular steel strip may comprise, by weight percent of the tubular steel strip, 0.06-0.10% carbon, 0.35-0.40% manganese, and balance steel, including unavoidable impurities.

According to another aspect of the present disclosure, a higher toughness steel alloy weld deposit may be produced using a flux-cored welding electrode (such as the welding electrode described in paragraph [0008]). The weld deposit may comprise, by weight percent of the weld deposit, 0 to 0.19% silicon. The weld deposit may further comprise, by weight percent of the weld deposit, 0 to 0.07% oxygen, 0 to 0 0.01% nitrogen, 0 to 0.03% aluminum, 0 to 0.015% zirconium, 0 to 0.09% titanium, 0 to 0.012% vanadium, 0 to 0.10% chromium, 0 to 0.01% molybdenum, 0 to 0.003% tungsten, 0 to 0.012% niobium, 0 to 0.50% nickel, 0.90 to 1.60% manganese, 0.01 to 0.12% carbon, 0 to 0.35% copper, and 0.0015 to 0.0065% boron.

It is to be understood that both the foregoing general description and the following detailed description describe various embodiments and are intended to provide an overview or framework for understanding the nature and character of the claimed subject matter. The accompanying drawings are included to provide a further understanding of the various embodiments, and are incorporated into and constitute a part of this specification. The drawings illustrate the various embodiments described herein, and together with the description serve to explain the principles and operations of the claimed subject matter.

### BRIEF DESCRIPTION OF THE DRAWINGS

The following is a description of the examples depicted in the accompanying drawings. The figures are not necessarily to scale, and certain features and certain views of the figures may be shown exaggerated in scale or in schematic in the interest of clarity or conciseness.
FIG. 1 shows a copy of the iron-rich end of an iron-carbon phase diagram (also referred to as an iron-iron carbide phase diagram or an iron-cementite phase diagram);
FIG. 2 shows an example cross-section of a flux-cored wire; and
FIG. 3 shows an example welding apparatus for flux-cored arc welding (FCAW) using a wire electrode.

The foregoing summary, as well as the following detailed description, will be better understood when read in conjunction with the figures. It should be understood that the claims are not limited to the arrangements and instrumentality shown in the figures. Furthermore, the appearance shown in the figures is one of many ornamental appearances that can be employed to achieve the stated functions of the apparatus.

### DETAILED DESCRIPTION

In the following detailed description, specific details may be set forth in order to provide a thorough understanding of embodiments of the present disclosure. However, it will be clear to one skilled in the art when disclosed examples may be practiced without some or all of these specific details. For the sake of brevity, well-known features or processes may not be described in detail. In addition, like or identical reference numerals may be used to identify common or similar elements.

One or more specific embodiments of the present disclosure will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements.

According to the present disclosure, newly-deposited weld metal has a novel and unique structure. In particular, the solid weld deposit metal is a unique combination of ferritic (phase) structures that is a product of the transformation from the austenite phase structure that existed above the start Ac₃ transformation temperature for that composition. The austenite structure and its composition, along with the rate of cooling, will dictate the "quality" of the final ferritic structure. Figure 1 shows an iron-iron carbide phase diagram.

In addition, multiple pass welds have the added benefit of reheating a portion of the previously deposited weld into the austenite structure. This reheated region cools less directionally than the freshly deposited liquid pool.

The mechanical properties of the weld deposit depend on the amount of the original as-deposited ferritic structure and the amount of ferritic structure that is a product of re-austenization (heat-affected-weld metal (HAWM)).

The amount of HAWM in the multiple pass weld metal is a direct function of the Ac₃ temperature (range). The lower the Ac₃ temperature of the weld metal, the more HAWM is generated. The Ac₃ temperature is determined by the composition of weld metal. Ferrite stabilizers generally raise the Ac₃ transition temperature (one exception is chromium, which initially lowers the Ac₃). Austenite stabilizers generally lower the Ac₃ transition temperature (one exception is cobalt, which slightly raises the Ac₃).

The weld deposit metal composition is important because, at the range of cooling rates encountered, the lower bainite ferritic structure is the preferred outcome. The composition should generate the lowest Ac₃ temperature and, during the deposition of the weld metal, should form inclusions within the liquid that develop a fine-grained austenite. This feature is important because the grain boundaries persist in the final ferritic structure. The weld metal should also be relatively clean; the inclusions (proportional to the oxygen and nitrogen content) should be controlled to the lowest level for that slag system.

The AWS A5.20 (A5.36) specification for an E71T-12 electrode type bounds the all-weld-metal chemical composition. These limits restrict the means by which the Ac₃ can be controlled. The austenite stabilizers are tightly bound. In the design of T-12, the preferred alloying ferrite stabilizer is silicon; this element is capped. Silicon raises the Ac₃ temperature, leading to grain growth in the ferrite phase. High silicon levels produce designs with better welder appeal. According to the present disclosure, it is possible to achieve the same amount of reaction with the oxygen in the system (from shielding gas and oxides) but with very low levels of ferrite stabilizers. To this end, all-or practically all-of the metallic silicon is removed from the electrode, and the amount of silicon dioxide that will reduce to silicon into the deposit is limited, so as to achieve no more than a limited amount of silicon in the weld deposit metal (e.g., no more than 0.19 or 0.15 weight percent). The deoxidation function lost by the removal of the metallic silicon is achieved by more reactive constituents that leave very small residual amounts in the weld metal. The primary deoxidizers that substitute for the silicon are zirconium and aluminum. Titanium is another possible substitute, but the use of titanium can lead to titanium levels in the weld metal that may cause embrittlement of the weld metal.

Overall, this approach allows one to include in the welding electrode higher levels of austenite stabilizers, which restore the tensile strength lost by the reduction in silicon in the weld deposit. The minimal amount of ferrite stabilizers in the weld deposit metal greatly reduce the Ac₃ temperature rise. The more favorable austenite/ferrite ratio results in an enhanced amount of refined structure in multiple pass welds.

When designing to an AWS specification electrode type, the deposit chemistry and minimum requirements for mechanical properties measured with specified test specimens extracted from the AWS groove must be met. Additionally, other testing bureaus such as the ABS (American Bureau of Shipping) may have unique testing requirements that qualify an electrode for use on designated applications. These tests are not aimed at testing all-weld-metal performance of the electrode but are aimed at predicting actual performance in use on a designated base material and with the electrode. One such test is the ABS 3G butt weld.

Welding electrodes according to the present disclosure are designed to have suitable Charpy "V" notch (CVN) toughness down to -76°F. It is accepted practice that CVN values that exceed 20 ft. lbs. at a test temperature are deemed to qualify for service at that temperature.

CVN toughness is dependent on the structure, composition and cleanliness of the weld deposit. Electrodes according to the present disclosure should meet the specified chemical composition ranges for the AWS electrode type. AWS also describes the general composition of the slag of each electrode type. Electrodes according to the present disclosure may be known as "rutile" type that accomplish very good all positional welding with relatively low spatter.

Within the deposit chemistry range for each electrode type, the deposit chemistry can be optimized to achieve maximum toughness. One technique is to achieve very high ratios of austenite stabilizers to ferrite stabilizers. As the ratio increases, the AC₃ transition temperature decreases; low AC₃ temperature has a favorable correlation to CVN toughness. Two reasons for this outcome are better single pass structure and, more importantly, greater volume of refined structure in multiple pass AWS groove welds.

According to the present disclosure, welding electrodes are prepared in which the silicon content in the flux core has been removed or reduced. This change reduces the silicon content of the weld metal. Silicon is present in rutile electrodes to react with oxygen and to improve weld-bead wetting/shape. According to the present disclosure, equal oxidation is achieved by using aluminum powder in the flux core. Aluminum powder reacts more completely; very little aluminum is recovered in the weld deposit. Some silicon is still found in the weld metal; this silicon comes from the dissolution of base material into the weld pool and from the reduction of silicon dioxide found in the core of the electrode.

As such, according to the present disclosure, the metal powders in the flux core will be nearly free of metallic silicon. For example, a reduced amount of metallic silicon (≤0.12% or ≤0.11% by weight of the electrode) in the form of a silicon-zirconium metal powder may be added to the flux core as a vehicle to add zirconium metal to the flux core. In addition, aluminum is used as a substitute for silicon. As such, zirconium may be added to the flux core in the form of aluminum-zirconium metal powder to enhance both the amount of zirconium and the amount of aluminum. Alternatively, zirconium may be added to the flux core in the form of nickel-zirconium metal powder. The aluminum may be added to the flux core in the form of aluminum-zirconium metal powder to additionally enhance the amount of zirconium. According to one aspect of the present disclosure, the flux core comprises 0.12-0.18% (e.g., 0.16%) aluminum and 0.25-0.30% (e.g., 0.26%) zirconium by weight of the electrode. This alloy combination, along with up to 0.50% (e.g., 0.44%) silicon dioxide in the flux core by weight of the electrode, results in an all-weld-metal (AWM) silicon content that is less than 0.20% (e.g., less than 0.19% or less than 0.15%) by weight of the weld deposit, and AWM aluminum that is less than 0.015% by weight of the weld deposit (AWS groove weld testing). According to certain aspects of the present disclosure, the AWM is less than 0.15% by weight of the weld deposit.

The above electrode composition and weld metal may be included in a slag system that uses clean rutile technology.

According to an aspect of the present disclosure, a flux-cored welding electrode for producing a higher toughness steel alloy weld deposit comprises a flux core and a tubular steel strip. The flux core may comprise, by weight percent of the electrode, up to 0.50% zirconium, up to 0.25% aluminum, up to 0.7% magnesium, up to 2.5% manganese, up to 0.6% nickel, up to 0.01% boron, up to 0.3% sodium oxide, up to 10% titanium dioxide, and up to 0.50% fluoride. The flux core may additionally comprise up to 0.15% silicon and up to 0.60% silicon dioxide. The metallic zirconium, aluminum, and silicon may be added to the flux core in the form of silicon-zirconium metal powder and aluminum-zirconium metal powder. Fluoride is used in the present disclosure to refer to a compound containing a fluorine anion (F⁻). The fluoride may be chosen from the group consisting of: lithium fluoride, sodium fluoride, aluminum fluoride, sodium cryolite, potassium fluorosilicate, Teflon, and combinations thereof. For example, the fluoride may be chosen from the group consisting of: lithium fluoride, sodium cryolite, Teflon, and combinations thereof.

According to one aspect of the present disclosure, the flux core may comprise, by weight percent of the electrode, 0.25-0.30% zirconium, 0.12-0.18% aluminum, 0.46-0.52% magnesium, 1.85-2.05% manganese, 0.35-0.45% nickel, 0.004-0.008% boron, 0.16-0.22% sodium oxide, 7.0-8.0% titanium dioxide, and 0.20-0.30% fluoride. The flux core may additionally comprise 0.08-0.11% silicon. The flux core may additionally comprise 0.42-0.50% silicon dioxide.

According to another aspect of the present disclosure, the flux core may comprise, by weight percent of the electrode: 0.26% zirconium, 0.16% aluminum, 0.49% magnesium, 1.95% manganese, 0.38% nickel, 0.18% sodium oxide, 7.4% titanium dioxide, and 0.26% fluoride. The flux core may additionally comprise 0.09% silicon. The flux core may additionally comprise 0.44% silicon dioxide.

The tubular steel strip may comprise, by weight percent of the tubular steel strip, up to 0.15% carbon, up to 0.5% manganese, and balance steel, including unavoidable impurities. For example, the tubular steel strip may comprise, by weight percent, 0.05-0.12% carbon and 0.25-0.50% manganese; or 0.06-0.10% carbon and 0.30-0.45% manganese; or 0.07-0.09% carbon and 0.35-0.40% manganese.

According to another aspect of the present disclosure, a higher toughness steel alloy weld deposit may be produced using a flux-cored welding electrode (such as the welding electrode described in paragraphs [0033]-[0036]). The amount of silicon in the weld deposit may be minimized in an effort to improve the toughness of the weld deposit. For example, the weld deposit may comprise, by weight percent of the weld deposit, 0 to 0.19% silicon, or 0 to 0.15% silicon. The weld deposit may further comprise, by weight percent of the weld deposit, 0 to 0.12% oxygen (e.g., 0 to 0.07% oxygen), 0 to 0.01% nitrogen, 0 to 0.03% aluminum (e.g., 0 to 0.02% aluminum), 0 to 0.015% zirconium (e.g., 0 to 0.005% zirconium), 0 to 0.09% titanium, 0 to 0.50% nickel, 0.90 to 1.60% manganese, 0.01 to 0.12% carbon, 0 to 0.35% copper (e.g., 0 to 0.020% copper), and 0 to 0.008% boron (e.g., 0.0015 to 0.0065% boron). The weld deposit may further comprise, by weight percent of the weld deposit, 0 to 0.012% vanadium, 0 to 0.10% chromium, 0 to 0.01% molybdenum, 0 to 0.003% tungsten, and 0 to 0.012% niobium.

According to an aspect of the present disclosure, the weight percent of oxygen and nitrogen in the weld deposit may be measured by a LECO combustion test. The weight percent of boron in the weld deposit (or in the welding electrode) may be measured by a calibrated arc spark spectrographic analyzer.

Table 1 shows properties of a weld deposit (Example 1) formed according to the present disclosure.

**TABLE 1**

| Welding experiment using an tubular welding wire according | embodiment (Example 1) of to the present disclosure. | | |
|---|---|---|---|
| Welding Parameters and Mechanical Properties | | Weld (weight %) | Chemistry |
| Amps | 180-200 | Carbon | 0.054 |
| Volts | 22-24 | Manganese | 1.596 |
| Current | DCEP | Phosphorus | 0.011 |
| Wire Feed Speed | 250/300 in/min | Sulfur | 0.010 |
| Travel Speed | 6 in/min | Silicon | 0.142 |
| Charpy-V-Notch at -60°F (as welded) | 54-78 ft. lbs. (64.4 ft. lbs. average) | Copper | 0.035 |
| Charpy-V-Notch at -76°F (as welded) | 17-66 ft. lbs. (50.6 ft. lbs. average) | Chromium | 0.015 |
| Charpy-V-Notch at -60°F (stress relief for 4 hours at 1150 °F welded) | 13-66 ft. lbs. (41.0 ft. lbs. average) | Vanadium | 0.003 |
| Total Passes | 8 | Nickel | 0.462 |
| | | Molybdenum | 0.007 |
| | | Aluminum | 0.019 |
| | | Titanium | 0.051 |
| | | Niobium | 0.004 |
| | | Cobalt | 0.0020 |
| | | Boron | 0.00368 |
| | | Tungsten | 0.001 |
| | | Tin | 0.00500 |
| | | Lead | 0.00100 |
| | | Zirconium | 0.00100 |
| | | Antimony | 0.00300 |
| | | Arsenic | 0.00220 |

Table 2 shows properties of a weld deposit (Example 2) formed according to the present disclosure.

**TABLE 2**

| Welding experiment using tubular welding wire according | an embodiment (Example 2) of to the present disclosure. | | |
|---|---|---|---|
| Welding Parameters and Mechanical Properties | | Weld (weight %) | Chemistry |
| | | Carbon | 0.040 |
| Volts | 28 | Manganese | 1.597 |
| Current | DCEP | Phosphorus | 0.011 |
| Wire Feed Speed | 400 in/min | Sulfur | 0.010 |
| Travel Speed | 10 in/min | Silicon | 0.127 |
| Charpy-V-Notch at -76 °F (as welded) | 105-125 ft. lbs. (114.6 ft. lbs. average) | Copper | 0.019 |
| Charpy-V-Notch at -76 °F (stress relief for 4 hours at 1150 °F welded) | 18-100 ft. lbs. (76.7 ft. lbs. average) | Chromium | 0.016 |
| Total Passes | 8 | Vanadium | 0.003 |
| | | Nickel | 0.481 |
| | | Molybdenum | 0.011 |
| | | Aluminum | 0.018 |
| | | Titanium | 0.045 |
| | | Niobium | 0.002 |
| | | Cobalt | 0.0020 |
| | | Boron | 0.00309 |
| | | Tungsten | 0.001 |
| | | Tin | 0.00600 |
| | | Lead | 0.00100 |
| | | Zirconium | 0.00100 |
| | | Antimony | 0.00400 |
| | | Arsenic | 0.00325 |

Table 3 shows properties of a weld deposit (Example 3) formed according to the present disclosure.

**TABLE 3**

| Welding experiment using an embodiment (Example 3) of tubular welding wire according to the present disclosure. | | | |
|---|---|---|---|
| Welding Parameters and Mechanical Properties | | Weld (weight %) | Chemistry |
| | | Carbon | 0.046 |
| Volts | 28 | Manganese | 1.987 |
| Current | DCEP | Phosphorus | 0.009 |
| Wire Feed Speed | 400 in/min | Sulfur | 0.011 |
| Travel Speed | 10 in/min | Silicon | 0.111 |
| Charpy-V-Notch at -60 °F (as welded) | 67-76 ft. lbs. (71.2 ft. lbs. average) | Copper | 0.013 |
| Charpy-V-Notch at -60 °F (stress relief for 1 hour at 1150 °F welded) | 45-70 ft. lbs. (59.4 ft. lbs. average) | Chromium | 0.042 |
| Total Passes | 12 | Vanadium | 0.005 |
| | | Nickel | 2.632 |
| | | Molybdenum | 0.380 |
| | | Aluminum | 0.021 |
| | | Titanium | 0.050 |
| | | Niobium | 0.004 |
| | | Cobalt | 0.0040 |
| | | Boron | 0.00428 |
| | | Tungsten | 0.001 |
| | | Tin | 0.00400 |
| | | Lead | 0.00200 |
| | | Zirconium | 0.00100 |
| | | Antimony | 0.00200 |
| | | Arsenic | 0.00539 |

As shown in Tables 1-3, the as-welded Charpy-V-Notch (CVN) toughness of the weld deposit at -60 °F may be, for example, at least 60 ft. lbs. or at least 70 ft. lbs. The CVN toughness of the weld deposit at -76 °F may be, for example, at least 50 ft. lbs., or at least 110 ft. lbs. The CVN toughness of the weld deposit at -60 °F after 4 hours of stress relief at 1150 °F may be, for example, at least 40 ft. lbs. or at least 75 ft. lbs. The CVN toughness of the weld deposit at -60 °F after 1 hour of stress relief at 1150 °F may be, for example, at least 55 ft. lbs.

According to an aspect of the present disclosure, the weld deposit may be produced by welding in ABS specified butt welds and in AWS A5.20 E71T-12 groove welds and which meets AWS A5.20 E71T-12 all-weld-metal composition requirements and limits.

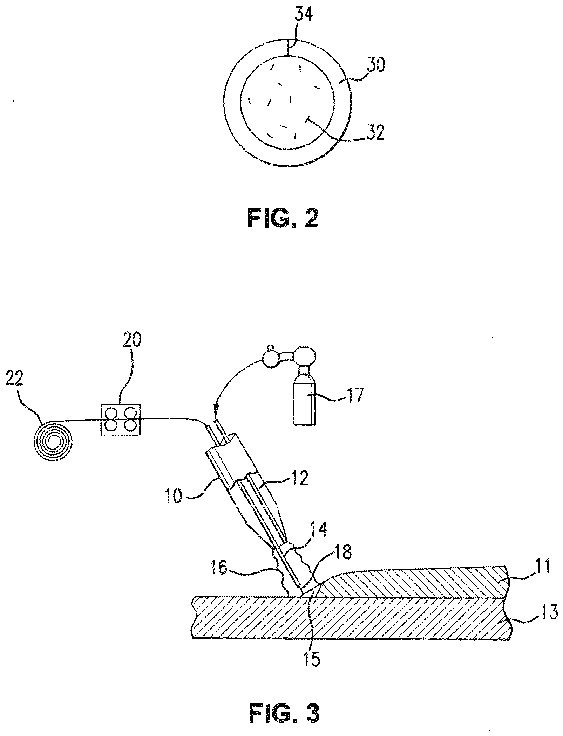

According to one aspect of the present disclosure, one may manufacture a flux-cored wire electrode by providing a strip (or a sheath material) and feeding the strip through shaping dies which bend the strip and form it into a shape that can be filled with the ingredients of the flux core composition. Generally, the shape that is formed is a U-shape. The shaped sheath is then filled with the flux core composition. The wire then travels through closing dies which close it into a tubular form, in which the sheath 30 encapsulates the core 32, thus forming a flux-cored wire electrode, as illustrated in Fig. 2. The flux-cored wire electrode may have a seam 34. The ingredients of the flux core composition are often powdered, which may be compacted when the encapsulated wire is fed through drawing dies to reduce the wire's diameter to a final desired diameter.

According to an aspect of the present disclosure, the electrode may comprise, by weight percentage of the electrode, 75-95% sheath and 25-5% flux core; or 80-95% sheath and 20-5% flux core; or 85-90% sheath and 15-10% flux core. Other ranges of sheath to flux core may be feasible and still within the scope of the present disclosure.

Fig. 3 illustrates an example welding apparatus for flux-cored arc welding (FCAW) using a wire electrode according to the present disclosure. The welding apparatus comprises a direct current power supply 50, a welding gun 10, a wire electrode 14 and a means for feeding the wire electrode 14 into the welding gun 50. An example of the means for feeding the wire electrode is illustrated in Fig. 3 as a wire drive 20 and a wire reel 22. Alternatively, any other way of feeding the wire electrode into the welding gun may be used. A shielding gas 16 may be supplied to the welding process through a gas nozzle 12 in the welding gun 10. The wire electrode 14 may have a sheath and a core having a flux core composition as described in the present disclosure. An arc 18 is formed between the wire electrode 14 and one or more workpieces 11, 13 to form a molten weld pool 15. The shielding gas 16 may be supplied to the welding process from an external source 17. For an FCAW process in which the welding gun is coupled to a direct current power supply, the shielding gas may be a mixture of Ar and CO₂ mixed in ratios of 75% Ar/25% CO_{2,} 80% Ar/20% CO₂, 82% Ar/18% CO₂, 90% Ar/10% CO₂ or 95% Ar/5% CO₂. Alternatively, one could use 100% of CO₂ as a shielding gas or a ratio of 95% Ar/up to 5% of O₂ to stabilize the arc, or other suitable blends of shielding gas.

The various aspects and embodiments disclosed herein are not intended to be limiting. Other embodiments may be utilized, and other changes may be made, without departing from the spirit or scope of the subject matter presented herein. It will be readily understood that the aspects of the present disclosure, as generally described herein and illustrated in the figures, can be arranged, substituted, combined, separated, and designed in a wide variety of different configurations, all of which are contemplated herein.

Certain implementations are described in the following numbered clauses:
Clause 1. A flux-cored welding electrode for producing a higher toughness steel alloy weld deposit comprising:
   a flux core; and
   a tubular steel strip;
   wherein the flux core comprises, by weight percent of the electrode:
      0.25-0.30% zirconium,
      0.12-0.18% aluminum,
      0-0.11% silicon,
      0.46-0.52% magnesium,
      1.85-2.05% manganese,
      0.35-0.45% nickel,
      0.004-0.008% boron,
      0.16-0.22% sodium oxide,
      7.0-8.0% titanium dioxide,
      0-0.50% silicon dioxide, and
      0.20-0.30% fluoride.
Clause 2. The flux-cored welding electrode of clause 1, wherein the flux core further comprises, by weight percent of the electrode, 0.08-0.11% silicon.
Clause 3. The flux-cored welding electrode of clause 1, wherein the flux core further comprises, by weight percent of the electrode, 0.42-0.50% silicon dioxide.
Clause 4. The flux-cored welding electrode of clause 1, wherein the fluoride is chosen from the group consisting of: lithium fluoride, sodium fluoride, aluminum fluoride, sodium cryolite, potassium fluorosilicate, Teflon, and combinations thereof.
Clause 5. The flux-cored welding electrode of clause 4, wherein the fluoride is chosen from the group consisting of: lithium fluoride, sodium cryolite, Teflon, and combinations thereof.
Clause 6. The flux-cored welding electrode of clause 1, wherein the flux core comprises zirconium and silicon in the form of silicon-zirconium metal powder.
Clause 7. The flux-cored welding electrode of clause 1, wherein the flux core comprises aluminum and silicon in the form of aluminum-zirconium metal powder.
Clause 8. The flux-cored welding electrode of clause 1, wherein the zirconium, aluminum, and silicon in the flux core consists of zirconium, aluminum, and silicon in the form of silicon-zirconium and aluminum-zirconium metal powder.
Clause 9. The flux-cored welding electrode of clause 1, wherein the tubular steel strip comprises, by weight percent of the tubular steel strip:
   0.05-0.12% carbon,
   0.30-0.45% manganese, and
   balance steel, including unavoidable impurities.
Clause 10. The flux-cored welding electrode of clause 7, wherein the tubular steel strip comprises, by weight percent of the tubular steel strip:
   0.06-0.10% carbon,
   0.35-0.40% manganese, and
   balance steel, including unavoidable impurities.
Clause 11. A higher toughness steel alloy weld deposit produced using the flux-cored welding electrode of clause 1 comprising, by weight percent: 0 to 0.19% silicon.
Clause 12. The higher toughness steel alloy weld deposit of clause 8, further comprising, by weight percent: 0 to 0.15% silicon.
Clause 13. The higher toughness steel alloy weld deposit of clause 8, further comprising, by weight percent:
   0 to 0.07% oxygen;
   0 to 0.01% nitrogen;
   0 to 0.03% aluminum;
   0 to 0.015% zirconium;
   0 to 0.09% titanium;
   0 to 0.50% nickel;
   0.90 to 1.60% manganese;
   0.01 to 0.12% carbon;
   0 to 0.35% copper; and
   0 to 0.008% boron.
Clause 14. The higher toughness steel alloy weld deposit of clause 10, wherein the weld deposit comprises, by weight percent: 0 to 0.012% vanadium.
Clause 15. The higher toughness steel alloy weld deposit of clause 10, wherein the weld deposit comprises, by weight percent: 0 to 0.10% chromium.
Clause 16. The higher toughness steel alloy weld deposit of clause 10, wherein the weld deposit comprises, by weight percent: 0 to 0.01% molybdenum.
Clause 17. The higher toughness steel alloy weld deposit of clause 10, wherein the weld deposit comprises, by weight percent: 0 to 0.003% tungsten.
Clause 18. The higher toughness steel alloy weld deposit of clause 10, wherein the weld deposit comprises, by weight percent: 0 to 0.012% niobium.
Clause 19. The higher toughness steel alloy weld deposit of clause 10, wherein the weld deposit comprises, by weight percent: 0.0015 to 0.0065% boron.
Clause 20. The higher toughness steel alloy weld deposit of clause 8, in which the as-welded Charpy-V-Notch (CVN) toughness of the weld deposit at -60 °F is at least 60 ft. lbs.

## Claims

1. A flux-cored welding electrode for producing a higher toughness steel alloy weld deposit comprising:
a flux core; and
a tubular steel strip;
wherein the flux core comprises, by weight percent of the electrode:
0.25-0.30% zirconium,
0.12-0.18% aluminum,
0-0.11% silicon,
0.46-0.52% magnesium,
1.85-2.05% manganese,
0.35-0.45% nickel,
0.004-0.008% boron,
0.16-0.22% sodium oxide,
7.0-8.0% titanium dioxide,
0-0.50% silicon dioxide, and
0.20-0.30% fluoride.

2. The flux-cored welding electrode of claim 1, wherein the flux core further comprises, by weight percent of the electrode, 0.08-0.11% silicon.

3. The flux-cored welding electrode of claim 1, wherein the flux core further comprises, by weight percent of the electrode, 0.42-0.50% silicon dioxide.

4. The flux-cored welding electrode of claim 1, wherein the fluoride is chosen from the group consisting of: lithium fluoride, sodium fluoride, aluminum fluoride, sodium cryolite, potassium fluorosilicate, Teflon, and combinations thereof.

5. The flux-cored welding electrode of claim 1, wherein the flux core comprises:
zirconium and silicon in the form of silicon-zirconium metal powder; or
aluminum and silicon in the form of aluminum-zirconium metal powder.

6. The flux-cored welding electrode of claim 1, wherein the zirconium, aluminum, and silicon in the flux core consists of zirconium, aluminum, and silicon in the form of silicon-zirconium and aluminum-zirconium metal powder.

7. The flux-cored welding electrode of claim 1, wherein the tubular steel strip comprises, by weight percent of the tubular steel strip:
0.05-0.12% carbon, preferably 0.06-0.10% carbon,
0.30-0.45% manganese, preferably 0.35-0.40% manganese, and
balance steel, including unavoidable impurities.

8. A higher toughness steel alloy weld deposit produced using the flux-cored welding electrode of claim 1 comprising, by weight percent: 0 to 0.19% silicon.

9. The higher toughness steel alloy weld deposit of claim 8, further comprising, by weight percent: 0 to 0.15% silicon.

10. The higher toughness steel alloy weld deposit of claim 8, further comprising, by weight percent:
0 to 0.07% oxygen;
0 to 0.01% nitrogen;
0 to 0.03% aluminum;
0 to 0.015% zirconium;
0 to 0.09% titanium;
0 to 0.50% nickel;
0.90 to 1.60% manganese;
0.01 to 0.12% carbon;
0 to 0.35% copper; and
0 to 0.008% boron.

11. The higher toughness steel alloy weld deposit of claim 10, wherein the weld deposit comprises, by weight percent: 0 to 0.012% vanadium.

12. The higher toughness steel alloy weld deposit of claim 10, wherein the weld deposit comprises, by weight percent: 0 to 0.10% chromium.

13. The higher toughness steel alloy weld deposit of claim 10, wherein the weld deposit comprises, by weight percent:
0 to 0.01% molybdenum; or
0 to 0.003% tungsten.

14. The higher toughness steel alloy weld deposit of claim 10, wherein the weld deposit comprises, by weight percent:
0 to 0.012% niobium; or
0.0015 to 0.0065% boron.

15. The higher toughness steel alloy weld deposit of claim8, in which the as-welded Charpy-V-Notch (CVN) toughness of the weld deposit at -60 °F is at least 60 ft. lbs.
